(19) Europäisches Patentamt
European Patent Office
Office européen des brevets

(11) **EP 2 519 852 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: **11716229.7**

(22) Anmeldetag: **18.04.2011**

(51) Int Cl.:
**G02B 13/00** (2006.01)    **G02B 15/04** (2006.01)

(86) Internationale Anmeldenummer:
**PCT/EP2011/056147**

(87) Internationale Veröffentlichungsnummer:
**WO 2011/141280 (17.11.2011 Gazette 2011/46)**

(54) **KAMERA-MODUL MIT UMSCHALTBARER BRENNWEITE**

CAMERA MODULE HAVING A SWITCHABLE FOCAL LENGTH

MODULE CAMÉRA AVEC DISTANCE FOCALE COMMUTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2010 DE 102010020243**

(43) Veröffentlichungstag der Anmeldung:
**07.11.2012 Patentblatt 2012/45**

(73) Patentinhaber: **Jos. Schneider Optische Werke GmbH**
**55543 Bad Kreuznach (DE)**

(72) Erfinder:
• **SCHAUSS, Udo**
**55596 Waldböckelheim (DE)**
• **STAUB, Josef**
**55437 Ockenheim (DE)**
• **WANG, Lingli**
**55543 Bad Kreuznach (DE)**

(74) Vertreter: **Köllner, Malte et al**
**Köllner & Partner**
**Patentanwälte**
**Vogelweidstrasse 8**
**60596 Frankfurt am Main (DE)**

(56) Entgegenhaltungen:
JP-A- 62 244 011     US-A1- 2007 086 087
US-A1- 2008 088 732

**Beschreibung**

Gebiet der Erfindung

Die Erfindung betrifft ein Kamera-Modul mit umschaltbarer Brennweite zum Abbilden eines Objektes auf einen Bildsensor.

Stand der Technik

Die Tendenz bei der Entwicklung optischer Module, insbesondere für Mobilfunk-Geräte (Handies), ist zunehmend auf eine möglichst flache Bauweise gerichtet. Dabei steht u. a. auch die Realisierung eines mehrfachen optischen Zooms mehr und mehr im Mittelpunkt der Arbeit der Entwickler. Die ständig steigenden Anforderungen, die an den möglichst flachen Aufbau der Module gestellt sind, setzen jedoch Grenzen für die bisher verwendeten Vorrichtungen und Systeme insbesondere auch in Hinblick auf die Variabilität der Brennweite.

In einem bekannten System der eingangs genannten Art (US 2008/0049334 A1) wird ein optisches System mit Zoom-Funktion beschrieben. Das beschriebene System verfügt über eine erste feste Linsengruppe mit einem totalreflektierenden Prisma, welches die bildseitige optische Achse um 90 Grad in Richtung des Bildsensors ablenkt. Die erste Linsengruppe ist positiv. Hinter dem Prisma auf der optischen Achse in Richtung des Bildsensors sind drei weitere Linsengruppen angeordnet. Die vierte optische Gruppe ist ebenfalls fest. Der Zoom wird mittels der beweglichen zweiten und dritten Linsengruppe realisiert. Die Realisierung einer besonders flachen Bauweise ist bei dieser Anordnung des optischen Systems jedoch begrenzt.

Eine andere Schrift (US 2008/0007623) beschreibt ein Kamera-Modul mit zwei Trägerplatten, die in zwei Ebenen übereinander angeordnet sind. Jede Trägerplatte weist vier symmetrisch nebeneinander fix angeordnete Linsen, die miteinander korrespondieren. Über eine Shift-Vorrichtung erfolgt die Fokussierung der vier Strahlengänge auf vier definierte Bereiche eines Bildsensors. Der Strahlengang verläuft dabei durch verschiedene Farbfilter, so dass auf die vier Bereiche des Bildsensors nur monochrome Bilder abgebildet werden. Diese vier Bilder werden in einem Signalverarbeitungssystem elektronisch zu einem hoch aufgelösten Farbbild zusammengesetzt.

In der US 7,495,852 B2 wird ein Zoom-Objektiv beschrieben, beispielsweise für ein Mobiltelefon, welches eine Anordnung von mehreren miteinander kombinierbaren Linsen aufweist. Die Linsen können durch eine Bewegung senkrecht zur optischen Achse der Aufnahmevorrichtung (Kamera) in die optische Achse eingefügt bzw. auch wieder aus ihr entfernt werden. Dabei sind vorzugsweise einzelne Linsen oder eine Mehrzahl von Linsen fest in Linsenarrays angeordnet, die in mehreren Ebenen parallel zur optischen Achse angeordnet sind. Die verschiedenen Brennweiten des Objektivs werden realisiert, indem gleichzeitig aus einem oder mehreren der übereinander angeordneten Linsenarrays jeweils eine Linse in die optische Achse eingebracht wird. Die Vorrichtung ist derart gestaltet, dass auf diese Weise unterschiedliche Linsen-Kombinationen in der optischen Achse realisiert werden können. Die Fokussierung des Systems erfolgt mittels einer speziellen Linsengruppe, die eine Bewegung entlang der optischen Achse ausführen kann. Detaillierte Angaben zu den optischen Eigenschaften der verwendeten Linsen bzw. der möglichen Linsenkombinationen und der damit erzielbaren Brennweiten sind in der o. g. Druckschrift nicht offenbart. Es steht zu vermuten, dass bei Kombination einzelner Linsen zu unterschiedlichen Linsenkombinationen die Abbildungseigenschaften zu wünschen übrig lassen werden. Ferner ist die Baulänge des Objektivs relativ lang, weshalb das vorgeschlagene Objektiv für Handys kaum geeignet ist.

Eine Vielzahl von Mobilfunkgeräten mit Foto-Funktion besitzen auch fast ausschließlich Festbrennweiten, da Zoomobjektive mit einem Zoomfaktor größer 2 eine relativ große Bauhöhe aufweisen. Das "Zoomen" erfolgt bei Foto-Funktion mit Festbrennweite elektronisch, was zu einer sehr starken Verringerung der Abbildungsleistung führt. So wird beispielsweise aus einer 3-Megapixel-Kamera eine Kamera mit VGA-Auflösung, was i. d. R. einer Auflösung von $640 \times 480$ Pixeln entspricht. Dabei bezeichnet VGA (Video Graphics Array) einen Computergrafik-Standard, der bestimmte Kombinationen von Bildauflösung und Farbanzahl (Farb-Bit-Tiefe) sowie Wiederholfrequenz definiert, wobei meist eine höhere Pixeltiefe bzw. Farbauflösung (bis 32 Bit) genutzt wird, die ursprünglich nicht zur Verfügung standen.

Weitere relevante Druckschriften sind US 2008/088732 A1, US 2007/0886087 A1 sowie JP 62 244 011.

Aufgabe

Aufgabe der Erfindung ist es, ein Kamera-Modul mit geringen Abmessungen anzugeben, das eine Mehrzahl von diskret schaltbaren Brennweiten bei guter Abbildungsqualität realisiert.

Lösung

Diese Aufgabe wird durch die Erfindung mit den Merkmalen des unabhängigen Anspruchs 1 gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Die Erfindung betrifft ein Kamera-Modul zum Abbilden eines Objektes auf einen Bildsensor, wobei Licht einen Strahlengang zwischen Objekt und Bildsensor durchläuft, wobei das Kamera-Modul folgendes aufweist:

a) mindestens zwei Trägerplatten,

a1) wobei die erste Trägerplatte eine Mehrzahl von Grundobjektiven mit einer optischen Achse trägt;
a2) wobei die zweite Trägerplatte eine Mehrzahl von Objektiv-Nachsätzen trägt;

b) wobei jede Trägerplatte eine Vorzugsebene aufweist, die rechtwinklig zur optischen Achse ausgerichtet ist;
c) wobei die Trägerplatten derart in ihrer Lage veränderbar sind, dass unterschiedliche Grundobjektive bzw. Objektiv-Nachsätze im Strahlengang positioniert werden können;
d) wobei die Trägerplatten im Strahlengang übereinander angeordnet sind;
e) wobei die Grundobjektive und die Objektiv-Nachsätze derart ausgebildet sind, dass sich durch ein Positionieren unterschiedlicher Linsenkombinationen aus

e1) einem Grundobjektiv allein, oder
e2) einem Grundobjektiv mit einem Objektiv-Nachsatz,

im Strahlengang sich eine Mehrzahl abbildender optischer Systeme mit unterschiedlichen Brennweiten erzeugen lässt, wobei die optischen Systeme geeignet sind, das Objekt auf den Bildsensor abzubilden; und
f) wobei die Grundobjektive und die Objektiv-Nachsätze derart ausgebildet sind, dass sich auf diese Weise mehr Linsenkombinationen mit unterschiedlichen Brennweiten realisieren lassen als die Anzahl an Grundobjektiven oder Objektiv-Nachsätze auf einer der Trägerplatten.

Hierbei ist es beispielsweise sinnvoll, die Mehrzahl von Grundobjektiven, beispielsweise symmetrisch in Reihe zueinander auf einer Trägerplatte anzuordnen, und eine Mehrzahl von Objektiv-Nachsätzen in der gleichen Weise auf einer zweiten Trägerplatte.

Die Veränderung der Lage der Trägerplatten erfolgt typischerweise dadurch, dass die Trägerplatten in ihrer Vorzugsebene verschoben werden, um ein anderes Grundobjektiv bzw. einen anderen Objektiv-Nachsatz im Strahlengang zu platzieren.

Zur Anpassung an die optischen Erfordernisse sind die Grundobjektive auf einem unterschiedlichen Höhenniveau fix in die Trägerplatte eingefügt. Die Nachsätze sind regelmäßig alle auf dem gleichen Höhenniveau in ihrer Trägerplatte fixiert.

Eine vorteilhafte Ausführung der vorgeschlagenen Lösung mit z. B. sechs Grundobjektiven und vier telenegativen Objektiv-Nachsätzen ermöglicht beispielsweise die Realisierung von 30 diskret schaltbaren unterschiedlichen Brennweiten. Hierdurch wird es möglich, einen quasi-Zoom mit geringen Abmessungen zu erreichen. Das vorgeschlagene System kann herausragende Abbildungsleistungen zeigen.

Vorteilhafterweise sollte das Kamera-Modul eine dem Objekt zugewandte Lichteintrittseinrichtung aufweisen, durch welche das vom Objekt kommende Licht in das Kamera-Modul eintritt. Sinnvoll ist dabei die Ausführung der Lichteintrittseinrichtung als eine optisch neutrale transparente Platte. Das kann eine z. B. ein einfaches Schutzglas sein.

In einer vorteilhaften Ausführung kann das Kamera-Modul ein Grundobjektiv aufweisen, welches, von der Objektseite beginnend, also von links nach rechts, aus folgenden Linsen besteht:

a) einer ersten plan-konvexen Linse, wobei die plane Oberfläche der Linse von der Objektseite abgewandt ist;
b) einer zweiten plan-konkaven Linse,
wobei die plane Oberfläche dieser Linse von der Bildseite abgewandt ist;
c) einer Blende ; und
d) einer dritten plan-konvexen Linse, wobei die plane Oberfläche der Linse von der Bildseite abgewandt ist.

Typischerweise sind die ersten beiden Linsen miteinander verkittet.

Von Vorteil ist es, dass die Realisierung des beschriebenen optischen Moduls, unter Beibehaltung der angestrebten Kompaktheit, nur einen Aufbau mit möglichst wenigen Linsen erfordert. Das konnte durch die Auswahl von hochbrechenden Materialien ($n_e > 1{,}65$) für das erste Kittglied des Grundobjektivs erreicht werden. Des Weiteren gelang es, durch die Einführung von Planflächen in das Grundobjektiv die Kosten zu optimieren und Toleranzen zu entschärfen.

Von Vorteil ist es auch, wenn der Objektiv-Nachsatz telenegative optische Eigenschaften aufweist. Allgemein ist ein TeleNegativ eine einem Grundobjektiv nachgestellte Baugruppe negativer Brechkraft zur Verlängerung der Brennweite des Grundobjektivs.

Eine vorteilhafte Ausführung eines telenegativen Objektiv-Nachsatzes besteht, von der Objektseite beginnend, also von links nach rechts, aus folgenden Linsen:

a) einer ersten bi-konkaven Linse, und
b) einer zweiten Meniskuslinse, die in der Regel positiv ist,

wobei die konkave Oberfläche der Meniskuslinse von der Objektseite abgewandt ist.

Die Telenegativ-Nachsätze bestehen vorteilhafter Weise nur aus einem Kittglied, dessen Abbé-Zahlen einen möglichst großen Unterschied aufweisen sollten. Vorzugsweise sollten die Abbé-Zahlen der ersten bi-konkaven Linse und der zweiten Meniskuslinse sich um mindestens einen Faktor 1,5 unterscheiden. Dadurch kann der Radius der verkitteten Fläche groß gehalten werden. Mit anderen Worten: die verkittete Fläche ist nur wenig gekrümmt. Dies hat wiederum den Vorteil, dass die zweite, positive Linse auch am Rand noch eine ausreichende Dicke hat.

Günstig ist es, wenn die Trägerplatte in einer Draufsicht insbesondere eine rechteckige Form oder eine Kreisform aufweist und wenn die Lageveränderung der Trägerplatte durch ein lineares Verschieben und / oder durch eine Rotationsbewegung in der Ebene der Trägerplatte erfolgt. D. h. die Trägerplatten können rechteckig, aber z. B. auch als kreisrunde Scheibe ausgestaltet sein. Bei der Ausgestaltung einer Trägerplatte als kreisrunde Scheibe erfolgt das Einfügen einer gewünschten Linsenkombinationen (Grundobjektiv oder Objektiv-Nachsätzen) in den Strahlengang mittels einer gesteuerten Rotationsbewegung der entsprechenden Trägerplatte.

Beide Trägerplatten sind in unterschiedlichen Ebenen, d. h. oben die Grundobjektive und darunter die Trägerplatte mit den Objektiv-Nachsätzen, angeordnet. Jede der Trägerplatten ist rechtwinklig zur optischen Achse bewegbar bzw. verschiebbar. Die Bewegungsmöglichkeiten der Trägerplatten zueinander sind so gestaltet, dass es möglich ist, jedes der Grundobjektive allein oder in Kombination mit einem der Objektiv-Nachsätze in den Strahlengang einzubringen.

Das Einfügen nur eines Grundobjektivs allein, ohne Nachsatz, in den Strahlengang kann derart erfolgen, dass entweder die Trägerplatte mit den Objektiv-Nachsätzen vollständig aus dem Strahlengang heraus bewegt wird. Oder in der zweiten Trägerplatte ist eine Leerstelle (z. B. Bohrung) ausgebildet, die einen hindernisfreien optisch neutralen Durchgang der Strahlen durch die Trägerlatte ermöglicht.

Besonders einfach ist es auch, wenn eine Fokussierung des Abbildungssystems mittels einer Lageveränderungdes Bildsensors entlang der optischen Achse ermöglicht wird. Eine solche Funktionalität ist in vielen Handys heutzutage bereits vorhanden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Dabei sind u. a. Linsenkombinationen von zwei Grundobjektiven bzw. Linsenkombinationen dieser zwei Grundobjektive mit je einem Telenegativ-Nachsatz schematisch dargestellt. Für weitere Linsenkombinationen bzw. Telenegativ-Nachsätze sind jeweils nur die optischen Daten tabellarisch erfasst. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1     eine schematische Darstellung einer vorteilhaften Ausführung eines Kamera-Moduls mit einem Linsen-Array aus sechs Grundobjektiven und einem Linsen-Array aus vier Telenegativ-Nachsätzen, angeordnet in zwei Ebenen;

Fig. 2     eine schematische Darstellung der Linsenanordnung eines 8mm-Grundobjektivs;
Fig. 3     die relative Beleuchtungsstärke des Grundobjektivs gemäß Fig. 2;
Fig. 4     die Verzeichnung des Grundobjektivs gemäß Fig. 2;
Fig. 5     die Transmission des Grundobjektivs gemäß Fig. 2:
Fig. 6     die Modulation des Grundobjektivs gemäß Fig. 2;
Fig. 7     eine schematische Darstellung der Linsenanordnung des 8mm-Grundobjektivs gem. Fig. 2 mit einem ersten Telenegativ-Nachsatz (TN1);
Fig. 8     die relative Beleuchtungsstärke der Linsenanordnung gemäß Fig. 7;
Fig. 9     die Verzeichnung der Linsenanordnung gemäß Fig. 7;
Fig. 10    die Transmission der Linsenanordnung gemäß Fig. 7;
Fig. 11    die Modulation der Linsenanordnung gemäß Fig. 7;
Fig. 12    eine schematische Darstellung der Linsenanordnung eines 12mm-Grundobjektivs;
Fig. 13    die relative Beleuchtungsstärke des Grundobjektivs gemäß Fig. 12;
Fig. 14    die Verzeichnung des Grundobjektivs gemäß Fig. 12;

4

Fig. 15    die Transmission des Grundobjektivs gemäß Fig. 12;

Fig. 16    die Modulation des Grundobjektivs gemäß Fig. 12;

Fig. 17    eine schematische Darstellung der Linsenanordnung des 12mm-Grundobjektivs gem. Fig. 12 mit einem zweiten Telenegativ-Nachsatz (TN2);

Fig. 18    die relative Beleuchtungsstärke der Linsenanordnung gemäß Fig. 17;

Fig. 19    die Verzeichnung der Linsenanordnung gemäß Fig. 17;

Fig. 20    die Transmission der Linsenanordnung gemäß Fig. 17; und

Fig. 21    die Modulation der Linsenanordnung gemäß Fig. 17.

Die technischen Daten der Linsenkombinationen von sechs vorgeschlagenen Grundobjektiven und vier Telenegativ-Nachsätzen TN1 bis TN4 sind in den Tabellen 2 bis 11A aufgelistet. Im Einzelnen zeigt:

Tab. 1      eine Liste der mit den Grundobjektiven bzw. den Kombinationen aus Grundobjektiv und Objektiv-Nachsatz realisierbaren Brennweiten;

Tab. 1A     eine Liste der Luftabstände zwischen der letzten Oberfläche der Grundobjektive und der ersten Oberfläche der Objektiv-Nachsätze;

Tab. 2      eine Liste der Radien, der Dicken bzw. Luftabstände, der Brechzahlen und der Abbé-Zahlen der Linsenkombination eines 6mm-Grundobjektivs;

Tab. 2A     eine Liste der Asphärendaten des 6mm-Grundobjektivs;

Tab. 3      eine Liste der Radien, der Dicken bzw. Luftabstände, der Brechzahlen und der Abbé-Zahlen der Linsenkombination eines 7mm-Grundobjektivs;

Tab. 3A     eine Liste der Asphärendaten des 7mm-Grundobjektivs;

Tab. 4      eine Liste der Radien, der Dicken bzw. Luftabstände, der Brechzahlen und der Abbé-Zahlen der Linsenkombination eines 8mm-Grundobjektivs;

Tab. 4A     eine Liste der Asphärendaten des 8mm-Grundobjektivs;

Tab. 5      eine Liste der Radien, der Dicken bzw. Luftabstände, der Brechzahlen und der Abbé-Zahlen der Linsenkombination eines 10mm-Grundobjektivs;

Tab. 5A     eine Liste der Asphärendaten des 10mm-Grundobjektivs;

Tab. 6      eine Liste der Radien, der Dicken bzw. Luftabstände, der Brechzahlen und der Abbé-Zahlen der Linsenkombination eines 12mm-Grundobjektivs;

Tab. 6A     eine Liste der Asphärendaten des 12mm-Grundobjektivs;

Tab. 7      eine Liste der Radien, der Dicken bzw. Luftabstände, der Brechzahlen und der Abbé-Zahlen der Linsenkombination eines 15mm-Grundobjektivs;

Tab. 7A     eine Liste der Asphärenkoeffizienten des 15mm-Grundobjektivs;

Tab. 8      eine Liste der Radien, der Dicken bzw. Luftabstände, der Brechzahlen und der Abbé-Zahlen der Linsenkombination eines ersten Telenegativ-Nachsatzes TN1;

Tab. 8A     eine Liste der Asphärendaten des ersten Telenegativ-Nachsatzes TN1;

Tab. 9      eine Liste der Radien, der Dicken bzw. Luftabstände, der Brechzahlen und der Abbé-Zahlen der Linsenkombination eines zweiten Telenegativ-Nachsatzes TN2

Tab. 9A     eine Liste der Asphärendaten des zweiten Telenegativ-Nachsatzes TN2;

Tab. 10     eine Liste der Radien, der Dicken bzw. Luftabstände, der Brechzahlen und der Abbé-Zahlen der Linsenkombination eines dritten Telenegativ-Nachsatzes TN3;

Tab. 10A    eine Liste der Asphärendaten des dritten Telenegativ-Nachsatzes TN3;

Tab. 11     eine Liste der Radien, der Dicken bzw. Luftabstände, der Brechzahlen und der Abbé-Zahlen der Linsenkombination eines vierten Telenegativ-Nachsatzes TN4; und

Tab. 11A    eine Liste der Asphärendaten des vierten Telenegativ-Nachsatzes TN4.

Eine vorteilhafte Ausführung der vorgeschlagenen Lösung mit sechs Grundobjektiven und vier telenegativen Objektiv-Nachsätzen ermöglicht beispielsweise die Realisierung von 30 diskret schaltbaren unterschiedlichen Brennweiten im Bereich von 5,99 mm bis 21,012 mm. Hierdurch wird es möglich, einen quasi 3,5-fachen Zoom für 1/3" Bildsensoren (entsprechend einer Diagonale des Bildsensors von 6 mm) mit einer Scheitelhöhe von bis zu 19 mm zu erreichen. D. h. der Abstand vom ersten Linsenscheitel bis zum Aufnahmemedium (Bildsensor) beträgt max. 19 mm. Der Durchmesser Linsen beträgt max. 6 mm.

Hierzu ist in der Tabelle 1 aufgeführt, welche konkreten Brennweiten mit diesen als Ausführungsbeispiele genannten sechs Grundobjektiven bzw. Kombinationen dieser Grundobjektive mit vier beispielhaften telenegativen Objektiv-Nachsätzen realisierbar sind.

Alle Grundobjektive haben die maximale Blendenzahl 3,5. Bei den Kombinationen eines Grundobjektivs mit einem Objektiv-Nachsatz errechnet sich die maximale Blendenzahl aus dem Produkt der Blendenzahl 3,5 und dem Verlängerungsfaktor, der durch die Kombination mit dem jeweiligen Objektiv-Nachsatz realisiert wird.

Beispielsweise bei der Kombination des 8mm-Grundobjektivs mit dem Telenegativ-Nachsatz TN1 ergibt sich Folgendes:

Brennweite des 8mm-Grundobjektivs: 8,022 mm
Brennweite bei Kombination mit TN1: 8,516 mm
Verlängerungsfaktor: 8,516/8,022 = 1,06
resultierende Blendenzahl: 1,06 x 3,5 = 3,71

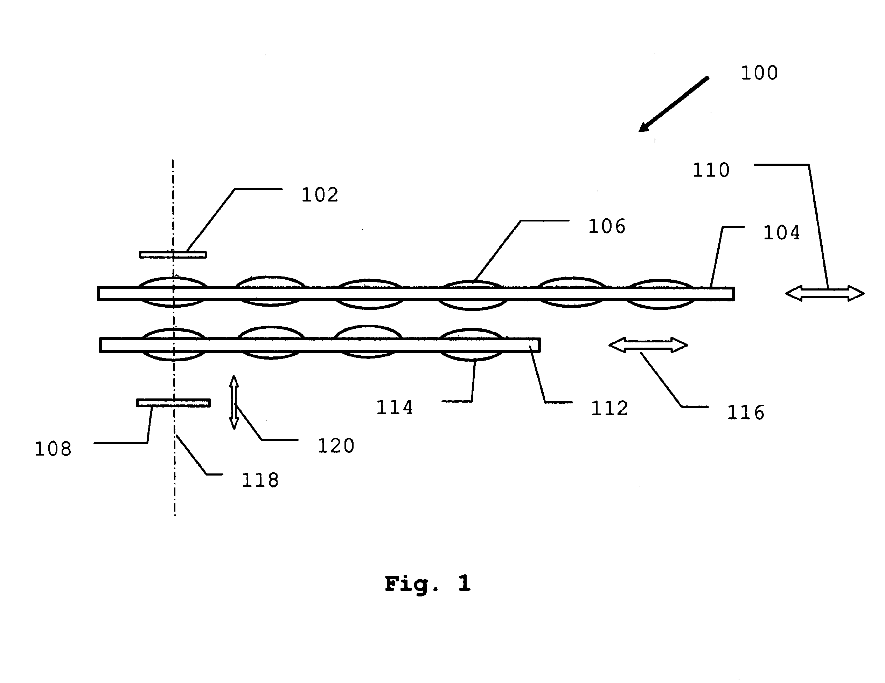

Das in Fig. 1 schematisch dargestellte Kamera-Modul 100 weist eine Lichteintrittseinrichtung 102, bestehend aus einer optisch neutralen transparenten Platte, ein Linsen-Array, welches aus einem rechteckigen plattenförmigen Trägerelement (Trägerplatte) 104 mit sechs Grundobjektiven 106 besteht, und einen Bildsensor 108 (i. d. R. einen CMOS- oder CCD-Sensor) auf. Die sechs Grundobjektive 106 verfügen über unterschiedliche Brennweiten und sind linear in einer Reihe in die Trägerplatte 104 fix eingefügt.

Zwischen den Linsen 106 existiert jeweils ein definierter Abstand, wobei diese Abstände i. d. R. gleich groß sind. Die Trägerplatte 104 mit den Grundobjektiven 106 weist eine horizontale Shift-Funktion 110 (1D-Shift) auf und kann in Längsrichtung des Kamera-Moduls 100 (senkrecht zur optischen Achse 118) verschoben werden. Die Verschiebung erfolgt derart, dass jeweils eines der sechs unterschiedlichen Grundobjektive 106 in den Luftzwischenraum zwischen der Lichteintrittseinrichtung 102 und Bildsensor 108 des Kamera-Moduls 100 eingebracht wird.

Weiterhin weist das Kamera-Modul 100 eine zweite Trägerplatte 112 auf, in der vier Telenegativ-Nachsätze 114 angeordnet sind. Die vier Telenegativ-Nachsätze 114 verfügen ebenfalls über unterschiedliche optische Eigenschaften und sind linear in einer Reihe in die Trägerplatte 112 fix eingefügt. Alle vier Telenegativ-Nachsätze 114 sind auf der Trägerplatte in einer Ebene linear in Reihe auf gleicher Höhe fest angeordnet. Die Trägerplatte 112 mit den vier Telenegativ-Nachsätze 114 weist eine horizontale Shift-Funktion 116 (1D-Shift) auf und kann in Längsrichtung des Kamera-Moduls 100 verschoben werden. Die Verschiebung erfolgt derart, dass jeweils einer der vier unterschiedlichen Telenegativ-Nachsätze 114 in die optische Achse 118 zwischen dem aktiv verwendeten Grundobjektiv 106 und dem Bildsensor 108 des Kamera-Moduls 100 eingefügt wird. Die Shift-Funktionen 110, 116 der Trägerplatten 104, 112 sind derart gestaltet, dass jedes Grundobjektiv 106 der Trägerplatte 104 mit jedem Telenegativ-Nachsatz 114 der Trägerplatte 112 kombiniert werden kann bzw. dass jedes Grundobjektiv 106 ohne Einfügung eines Telenegativ-Nachsatzes 114 in die optische Achse 118 zum Abbilden eines Objektes auf dem Bildsensor 108 verwendet werden kann.

Im Gegensatz zu den vier Telenegativ-Nachsätzen 114 sind die sechs Grundobjektive 106 in die Trägerplatte 104 derart eingefügt, dass sie zur Realisierung der optischen Erfordernisse hinsichtlich der Kombination mit den vier Telenegativ-Nachsätzen 114 auf unterschiedlicher Höhe (entlang der optischen Achse 118) fixiert sind.

Zur Fokussierung der jeweilig aktiven Linsenkombination ist der Bildsensor 108 mit einer Shift-Funktion 120 ausgestattet, die seine Bewegung entlang der optischen Achse 118 ermöglicht.

Auf der Grundlage der beschriebenen Ausgestaltung des Kamera-Moduls 100 ist es möglich, 30 unterschiedliche Brennweiten (s. Tabelle 1) zu realisieren und somit einen diskret schaltbaren Zoom in unterschiedlich großen Schritten zu erzeugen. Das Betätigen der Shift-Funktionen 110, 116, 118 erfolgt dabei in der Regel elektronisch, aber auch eine mechanische Betätigung ist denkbar.

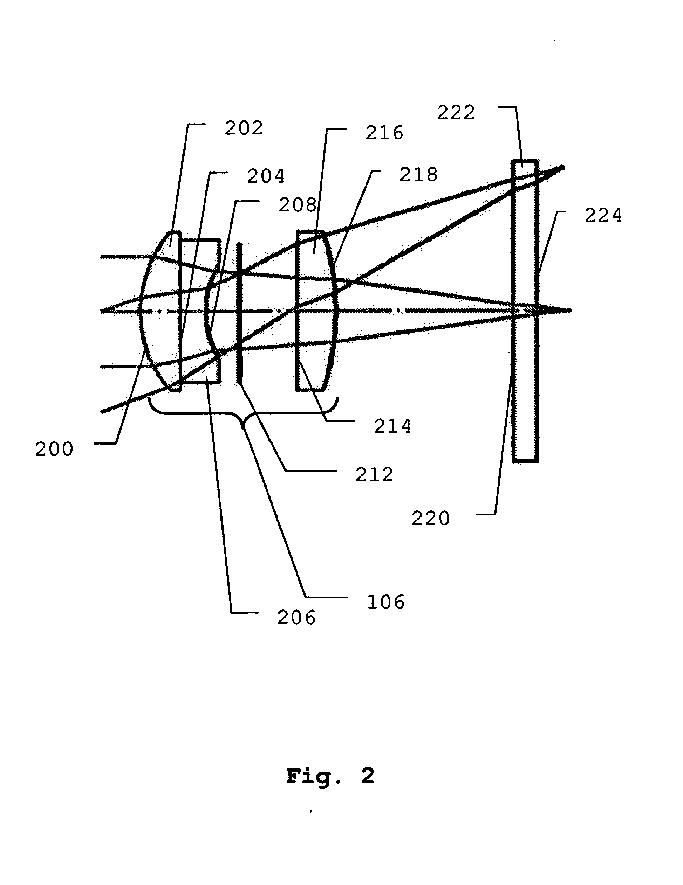

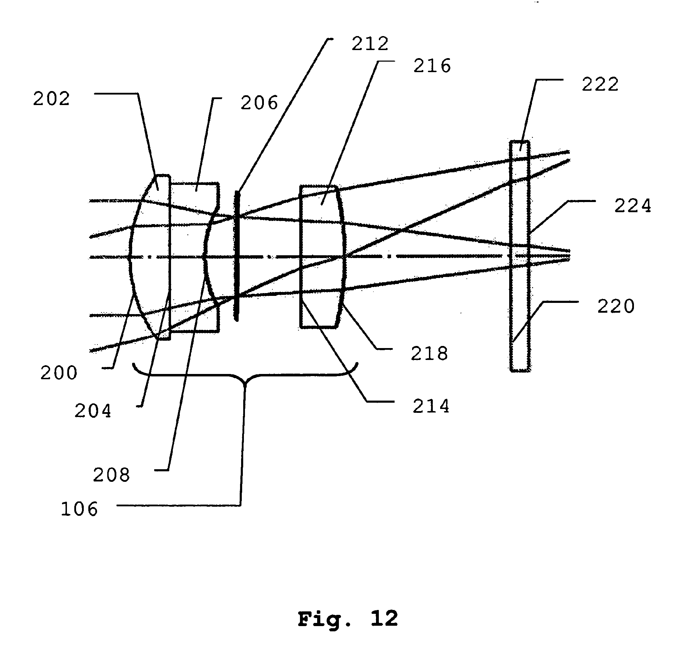

Die Fig. 2, 7, 12 und 17 zeigen die Linsenkombinationen zweier Ausführungsbeispiele (8mm-Grundobjektiv und 12mm-Grundobjektiv) jeweils ohne bzw. in Kombination mit einem Telenegativ-Nachsatz (TN1 bzw. TN2), die u. a. durch die Shift-Funktionen des vorgeschlagenen Kamera-Moduls realisierbar sind. Die in diesen Figuren dargestellten Linsenkombinationen stellen Beispiele mit gleichem grundlegenden Aufbau dar, die sich jedoch hinsichtlich der mit ihnen zu erzielenden Brennweite unterscheiden. Diesen gleichen grundlegenden Aufbau haben auch alle weiteren Linsenkombinationen, deren optische Daten in den in den Tabellen 1 bis 11A aufgeführt sind.

Die hier und in den Tabellen geschilderten Beispiele für Grundobjektive und Telenegativ-Nachsätze sind nur Beispiele. Es können - mit den gleichen Grundprinzipien - auch Kamera-Module mit anderen Brennweiten und anderen quasi-Zoom-Werten realisiert werden. Alle Maßangaben, z. B. über Brennweiten oder Radien in den Tabellen, sind grundsätzlich skalierbar für unterschiedliche Anwendungen.

In den schematischen Darstellungen gemäß den Fig. 2, 7, 12 und 17 befindet sich das Objekt (nicht dargestellt) jeweils links und der Bildsensor 108 (nicht dargestellt) rechts.

In diesen vier Ausführungsbeispielen besteht die Linsenkombination des einfügbaren Grundobjektivs 106 des Kamera-Moduls 100, in der Reihenfolge von der Objektseite zum Bildsensor 108, also von links nach rechts, jeweils aus folgenden Elementen:

a) einer ersten plan-konvexen Linse 202,
wobei die plane Oberfläche 204 der Linse 202 von der Objektseite abgewandt ist;
b) einer zweiten plan-konkaven Linse 206,

wobei die plane Oberfläche 204 der Linse von der Bildseite abgewandt ist;

c) einer Blende 212; und

d) einer dritten plan-konvexen Linse 216, wobei die plane Oberfläche 214 der Linse 216 von der Bildseite abgewandt ist.

Unmittelbar vor dem Bildsensor ist jeweils eine transparente Platte 222 angeordnet, die die Funktion eines IR-Cut-Filters oder eines Low-Pass-Filters oder beides erfüllt.

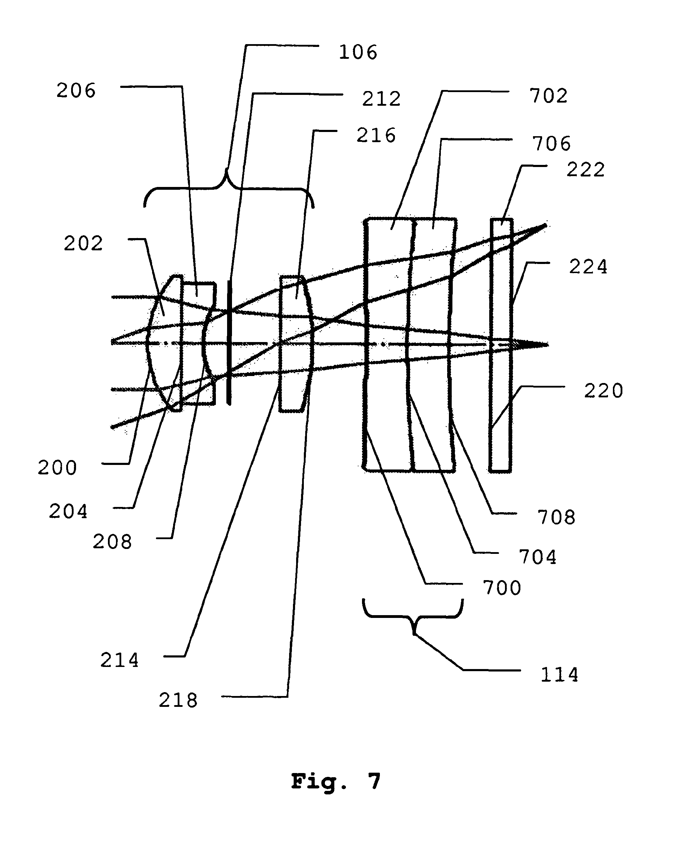

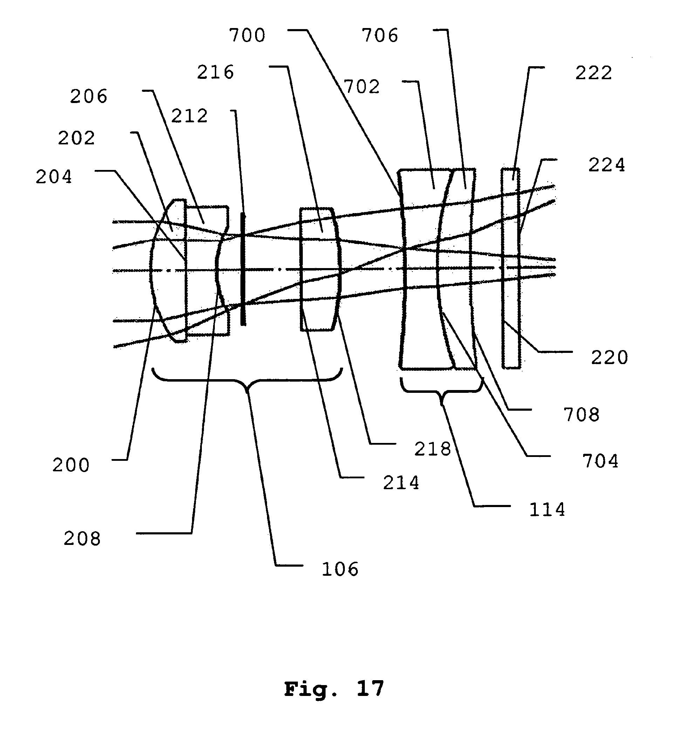

Die in den Figuren 7 und 17 eingefügten Objektiv-Nachsätze 114 verfügen über telenegative optische Eigenschaften und bestehen, von der Objektseite beginnend, also von links nach rechts, jeweils aus folgenden Linsen:

a) einer ersten bi-konkaven Linse 702, und

b) einer zweiten Meniskuslinse 706,

wobei die konkave Oberfläche 708 der Meniskuslinse 706 von der Objektseite abgewandt ist.

Die Luftabstände zwischen der letzten Oberfläche der Nachsätze und der dahinter angeordneten transparenten Platte 222 betragen häufig 1 mm.

Die erste und zweite Linse eines jeden Grundobjektivs 106 sind miteinander verkittet und bilden eine Dublette. Ebenfalls eine Dublette bilden die beiden Linsen 702, 706 des jeweiligen telenegativen Objektiv-Nachsatzes 114.

Die Durchmesser der Linsen der Objektiv-Nachsätze 114 betragen maximal 6 mm.

Die Oberflächen 208 und 218 der zweiten und dritten Linse jedes Grundobjektivs 106 haben eine asphärische Oberfläche.

Gleiches gilt für die Oberfläche 700 der ersten Linse 702 jedes Telenegativ-Nachsatzes.

Die genauen Angaben zu den einzelnen Oberflächen der Linsen der Ausführungsbeispiele gemäß den Fig. 2, 7, 12 und 17 finden sich in den Tabellen 4, 6, 8 und 9, jeweils mit den zugehörigen Bezugsziffern.

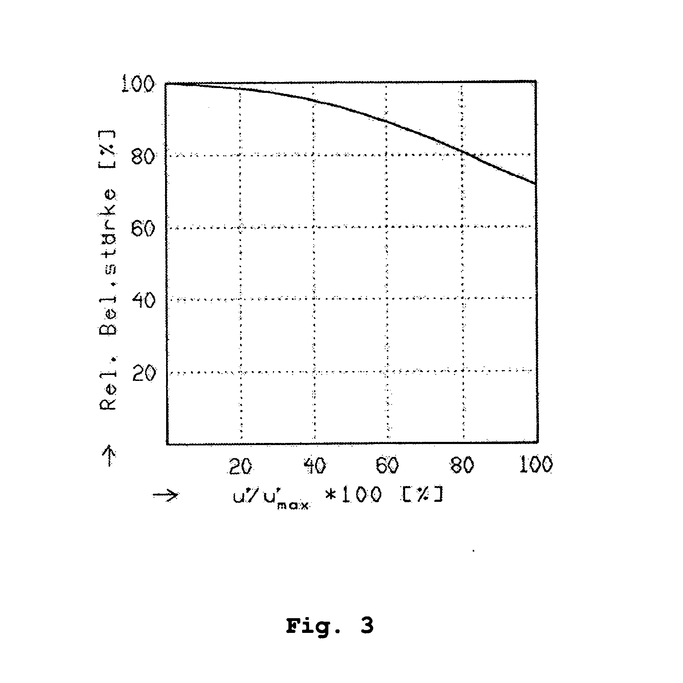

In den Figuren 3 bis 6 sind einige charakteristische Kenngrößen eines 8mm-Grundobjektivs gemäß dem Ausführungsbeispiel in Fig. 2 graphisch dargestellt.

Fig. 3 zeigt die relative Beleuchtungsstärke des Bildes verglichen mit dem Zentrum für das 8mm-Grundobjektiv gemäß Fig. 2. Die x-Achse gibt die relative Abweichung vom Zentrum des zu vergrößernden Bildes bei einer Blendenzahl von 3,5 an.

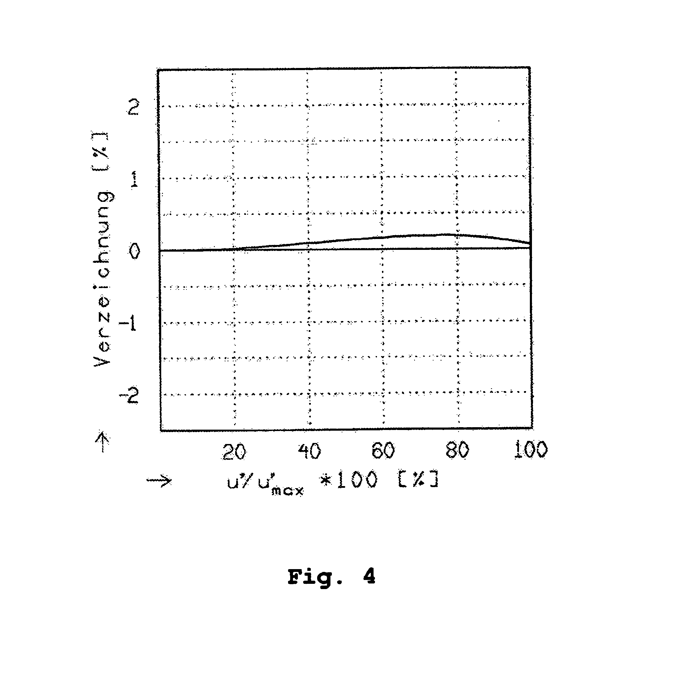

Fig. 4 zeigt die Verzeichnung für das Grundobjektiv gemäß Ausführungsbeispiel der Fig. 2 in Prozent (%) der Abweichung von der idealen Bildgröße. Die positiven Werte charakterisieren eine kissenförmige Verzeichnung, während die negativen Werte eine tonnenförmige Verzeichnung betreffen. Die x-Achse gibt die relative Abweichung vom Zentrum des zu vergrößernden Bildes bei einer Blendenzahl von 3,5 an.

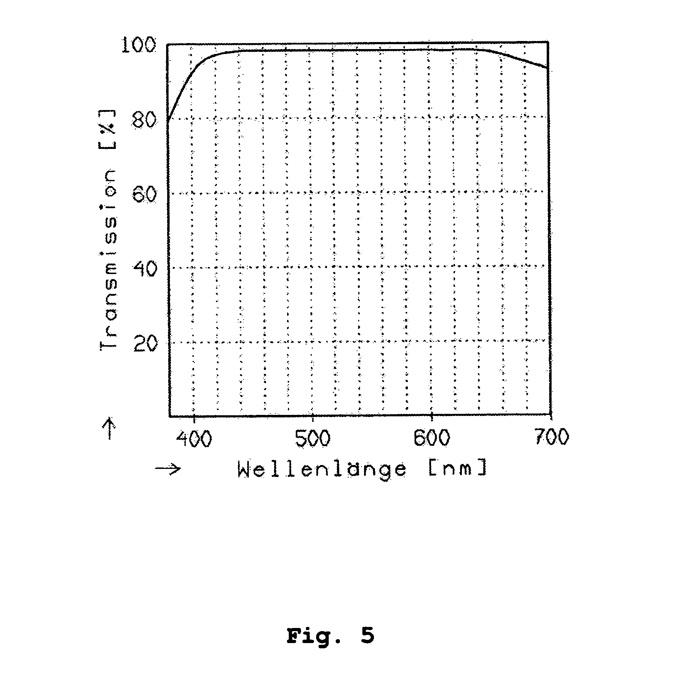

Fig. 5 zeigt graphisch den Verlauf des Transmissionsgrads in Prozent (%) für das Grundobjektiv gemäß dem Ausführungsbeispiel der Fig. 2 in Abhängigkeit von der Wellenlänge.

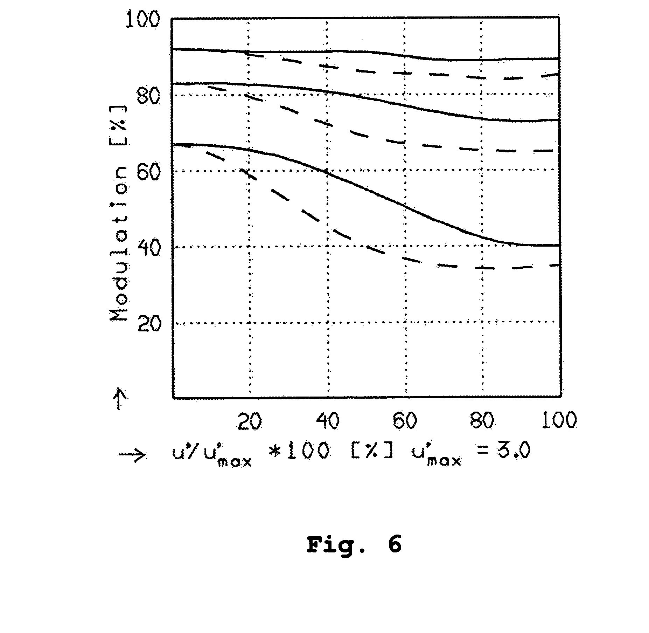

In Fig. 6 ist die Auflösung (Modulation) des Projektionsobjektivs der Fig. 2 als Funktion der relativen Bildgröße dargestellt. Die x-Achse gibt die relative Abweichung vom Zentrum des Bildes bei einer Blendenzahl von 3,5 an. Es wurde folgende Gewichtung der Wellenlängen verwendet: 555 nm mit 19,8%, 655 nm mit 23,7%, 605 nm mit 22,2%, 505 nm mit 15,7%, 455 nm mit 12,1% und 405 nm mit 6,7%. Gerechnet wurde mit den Ortsfrequenzen von 25, 50 und 100 Linienpaaren pro mm (LP / mm). Die durchgezogene Linie zeigt jeweils die Auflösung von radial verlaufenden Linienpaaren und die gestrichelte Linie die Auflösung von tangential verlaufenden Linienpaaren. Auf der y-Achse ist die Modulationsübertragungsfunktion bei einer Blendenzahl k von 3,5 dargestellt.

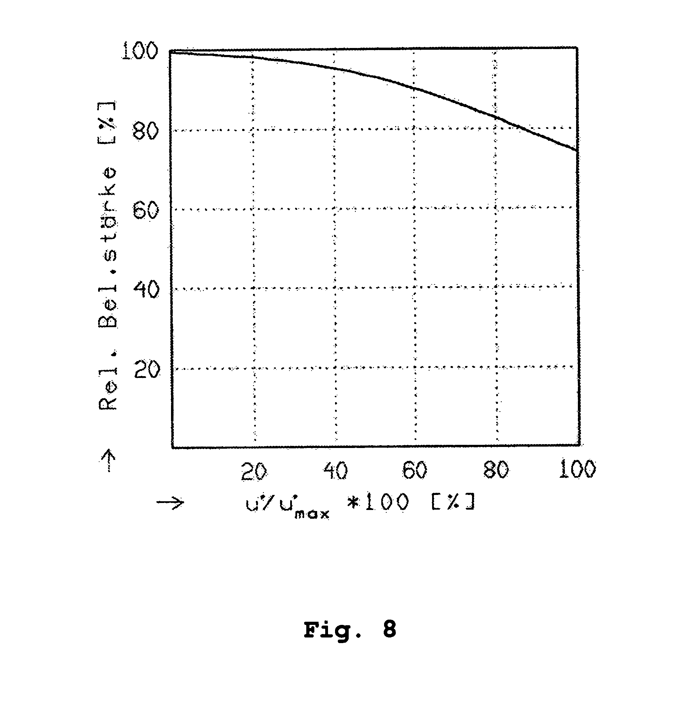

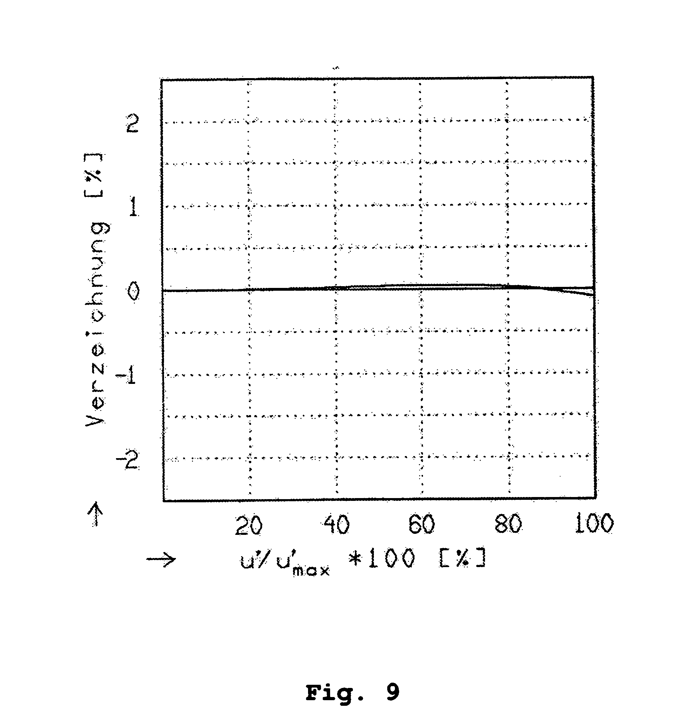

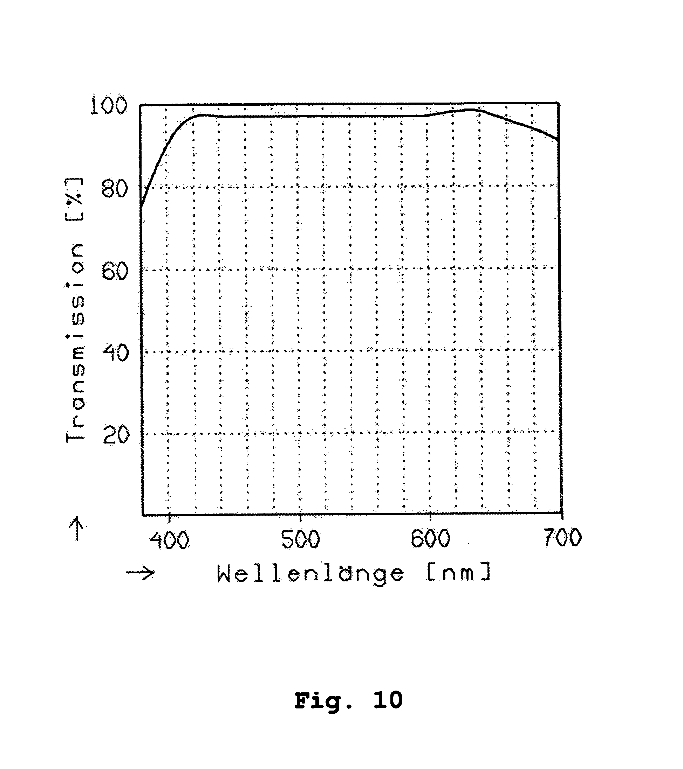

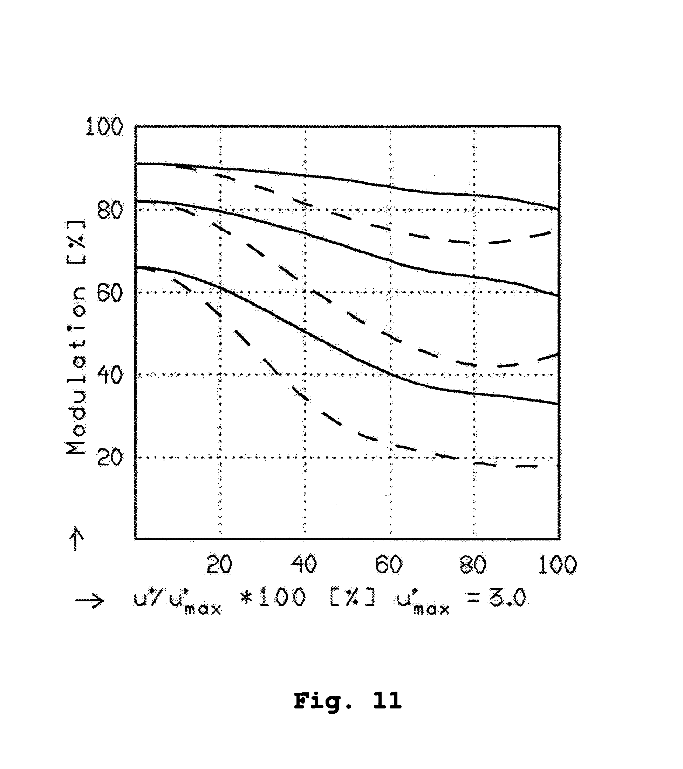

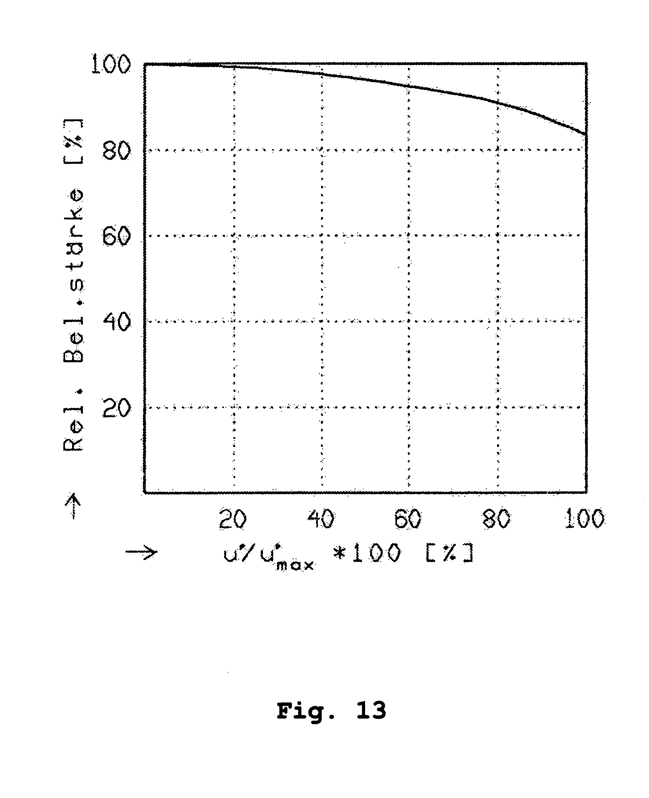

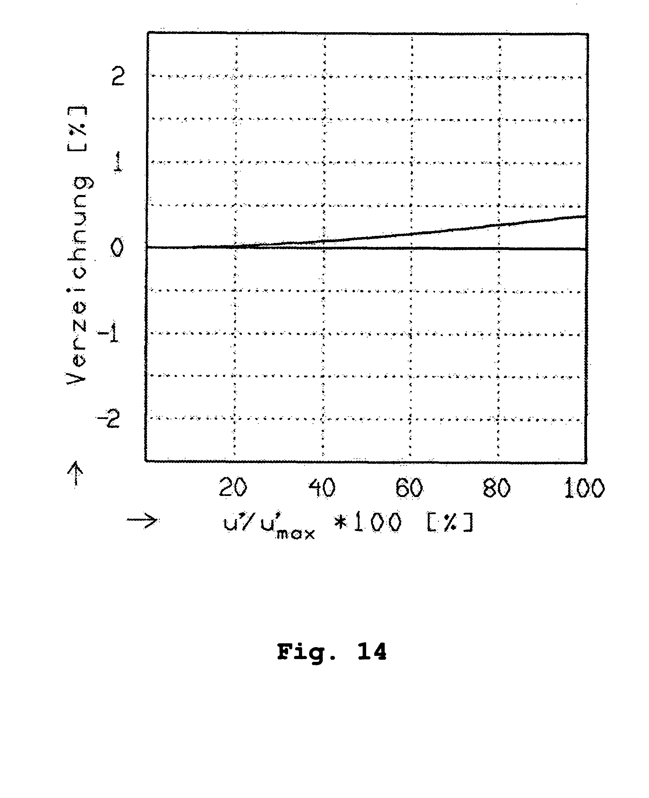

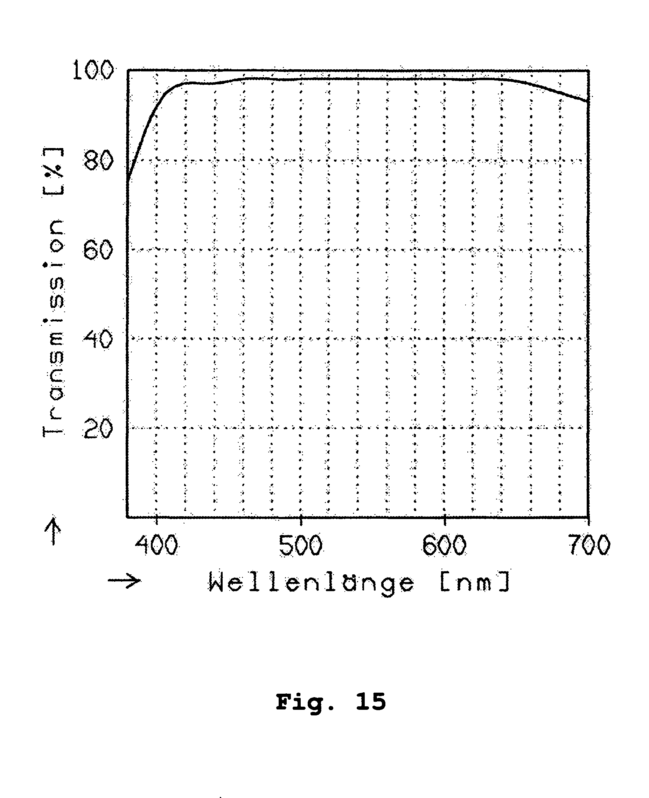

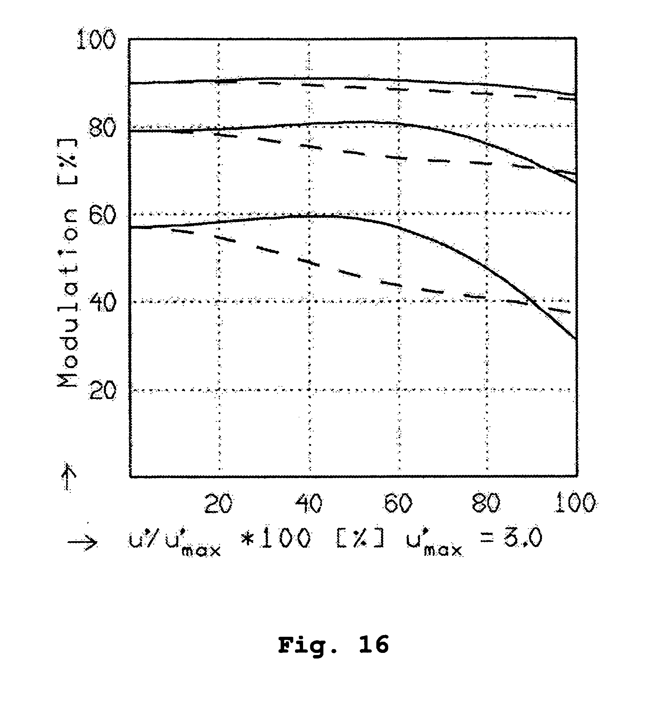

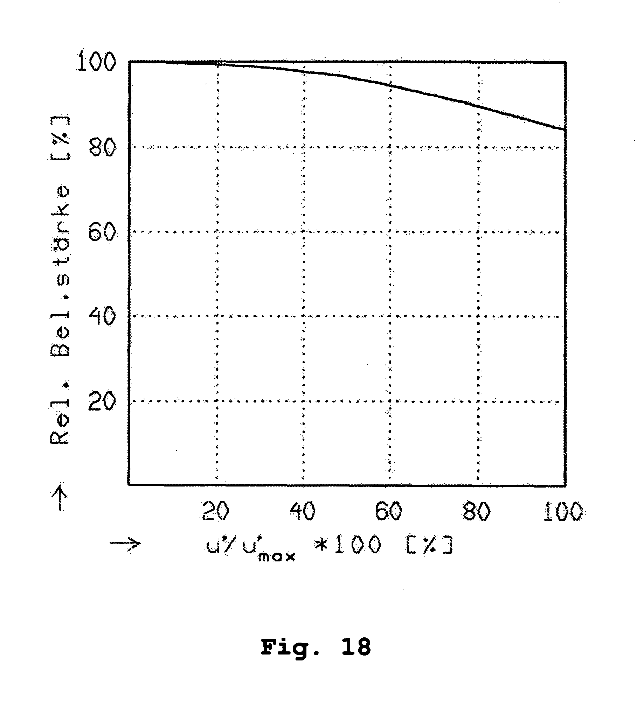

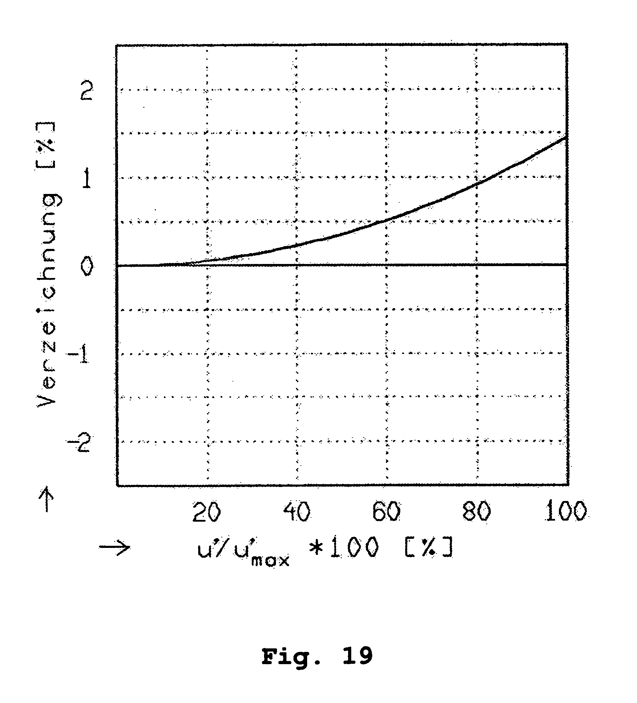

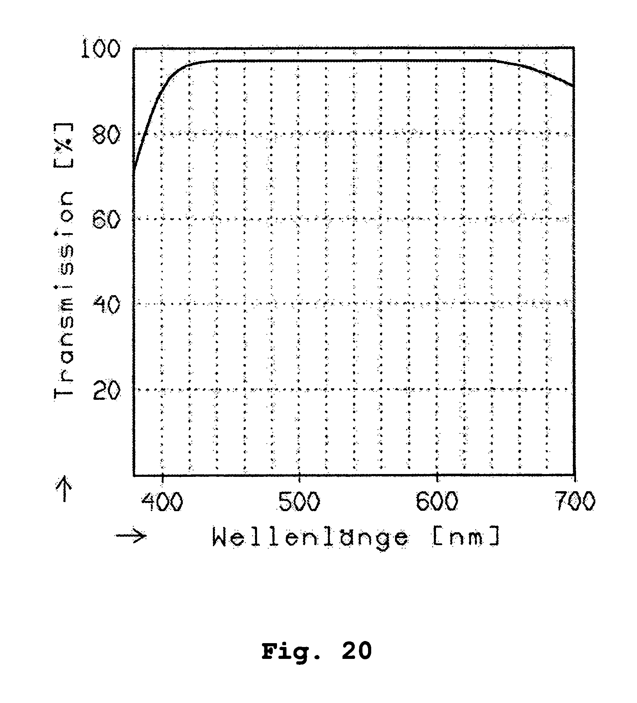

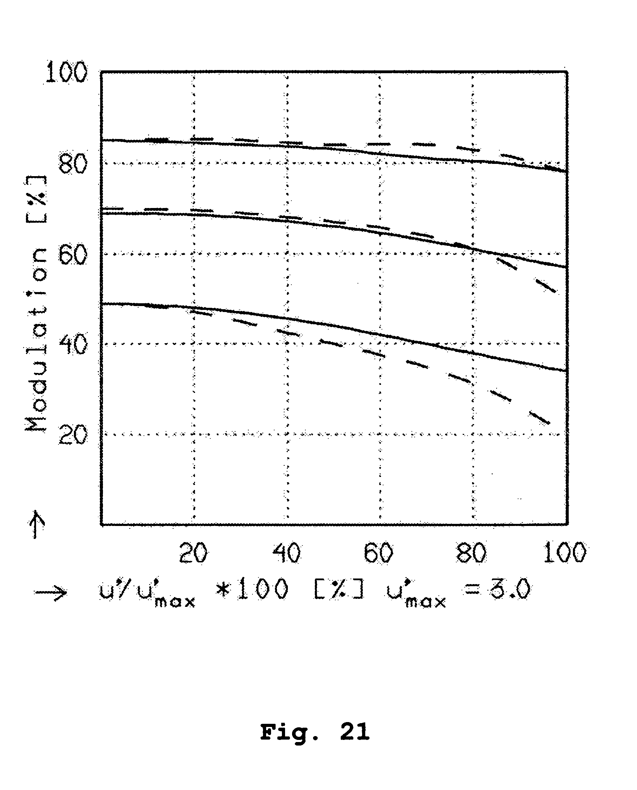

Sinngemäß gelten die vorgenannten Darlegungen hinsichtlich der Figuren 3 bis 6 auch für die Figuren 8 bis 11, die Figuren 13 bis 16 sowie für die Figuren 18 bis 21, wobei die max. Blendenzahlen für die Figuren 8 bis 11 bzw. für die Figuren 18 bis 21 auf dem entsprechenden Verlängerungsfaktor (s. oben) basieren.

Wie die Fig. 3 bis 6 zeigen, hat das vorgeschlagene Grundobjektiv ausgezeichnete Abbildungseigenschaften.

In Tabelle 1 ist aufgeführt, welche Brennweiten mit den als Ausführungsbeispiele genannten 6 Grundobjektiven bzw. Kombinationen dieser Grundobjektive mit vier beispielhaften telenegativen Objektiv-Nachsätzen realisierbar sind. Die Blendenzahl beträgt hierbei 3,5.

In den Tabellen 2 bis 11A sind die Radien, die Dicken bzw. Luftabstände, die Brechzahlen und die Abbé-Zahlen aller 6 Grundobjektive bzw. aller vier Objektiv-Nachsätze aufgelistet. Ebenso finden sich in diesen Tabellen deren Asphärendaten.

Die Oberfläche einer asphärischen Linse kann allgemein mit der folgenden Formel beschrieben werden:

$$z = \frac{Cy^2}{1 + \sqrt{1 - (1 + K) \cdot C^2 y^2}} + A_4 y^4 + A_6 y^6 + A_8 y^8 + A_{10} y^{10} + A_{12} y^{12}$$

wobei

- z die Pfeilhöhe (in mm) in Bezug auf die achsensenkrechte Ebene angibt, also die Richtung der Abweichung von der Ebene senkrecht zur optischen Achse, d. h. in Richtung der optischen Achse.
- C die sogenannte Scheitelkrümmung angibt. Sie dient zur Beschreibung der Krümmung einer konvexen oder konkaven Linsenoberfläche und errechnet sich aus dem Kehrwert des Radius.
- y den Abstand von der optischen Achse (in mm) angibt. y ist eine Radialkoordinate.
- K die sogenannte Konuskonstante angibt.
- $A_4$, $A_6$, $A_8$, $A_{10}$, $A_{12}$ die sogenannten Asphärenkoeffizienten darstellen, die die Koeffizienten einer Polynomentwicklung der Funktion zur Beschreibung der Oberfläche der Asphäre sind.

Von Vorteil ist es, dass die Realisierung des beschriebenen optischen Moduls, unter Beibehaltung der angestrebten Kompaktheit, nur einen Aufbau mit möglichst wenigen Linsen erfordert. Das konnte durch die Auswahl von hochbrechenden Materialien ($n_e > 1{,}65$) für das erste Kittglied des Grundobjektivs erreicht werden. Des Weiteren gelang es, durch die Einführung von Planflächen in das Grundobjektiv die Kosten zu optimieren und Toleranzen zu entschärfen.

Die Telenegativ-Nachsätze bestehen vorteilhafter Weise nur aus einem Kittglied, dessen Abbé-Zahlen einen möglichst großen Unterschied aufweisen sollten.

Bezugszeichen

| 100 | Kamera-Modul |
| 102 | Lichteintrittseinrichtung |
| 104 | Trägerplatte für Grundobjektive |
| 106 | Grundobjektiv |
| 108 | Bildsensor |
| 110 | Shift-Funktion (horizontal) für Grundobjektive |
| 112 | Trägerplatte für Telenegativ-Nachsätze |
| 114 | Telenegativ-Nachsatz |
| 116 | Shift-Funktion (horizontal) für Telenegativ-Nachsätze |
| 118 | optische Achse |
| 120 | Shift-Funktion für Bildsensor |
| 200 | erste Oberfläche der Linse 202 |
| 202 | erste Linse des Grundobjektivs |
| 204 | zweite Oberfläche der Linse 202/ erste Oberfläche der Linse 206 |
| 206 | zweite Linse des Grundobjektivs |
| 208 | zweite Oberfläche der Linse 206 |
| 212 | Blende |
| 214 | erste Oberfläche der Linse 216 |
| 216 | dritte Linse des Grundobjektivs |
| 218 | zweite Oberfläche der Linse 216 |
| 220 | erste Oberfläche der transparenten Platte 222 |
| 222 | transparente Platte vor dem Bildsensor |
| 224 | zweite Oberfläche transparenten Platte 222 |
| 700 | erste Oberfläche der Linse 702 |
| 702 | erste Linse des Objektiv-Nachsatzes |
| 704 | zweite Oberfläche der Linse 702 / erste Oberfläche der Linse 706 |
| 706 | zweite Linse des Objektiv-Nachsatzes |
| 708 | zweite Oberfläche der Linse 706 |

Tab. 1

|  | Bezeichnung der Grundobjektive | | | | | |
|---|---|---|---|---|---|---|
|  | 6 mm | 7 mm | 8 mm | 10 mm | 12 mm | 15 mm |
| Brennweiten F der Grundobjektive [mm] | 5,999 | 7,003 | 8,022 | 9,986 | 11,901 | 14,934 |

(fortgesetzt)

| | | 6 mm | 7 mm | 8 mm | 10 mm | 12 mm | 15 mm |
|---|---|---|---|---|---|---|---|
| | | | Bezeichnung der Grundobjektive | | | | |
| Brennweiten F der Kombinationen Grundobjektiv mit Telenegativ-Nachsatz (TN) [mm] | TN1 | 6,344 | 7,322 | 8,516 | 10,707 | 13,186 | 16,421 |
| | TN2 | 6,718 | 7,681 | 9,047 | 11,470 | 14,543 | 17,986 |
| | TN3 | 6,963 | 7,917 | 9,395 | 11,972 | 15,457 | 19,032 |
| | TN4 | 7,384 | 8,308 | 10,002 | 12,870 | 17,216 | 21,012 |

Tab. 1A

| | Bezeichnung der Grundobjektive | | | | | |
|---|---|---|---|---|---|---|
| | 6 mm | 7 mm | 8 mm | 10 mm | 12 mm | 15 mm |
| Luftabstände zwischen der letzten Ober-fläche der Grundobjektive und der ersten Oberfläche der Nachsätze TN1 bis TN4 [mm] | 0,300 | 1,300 | 1,300 | 2,000 | 2,000 | 4,000 |

Tab. 2

| Brennweite = 5,999 mm | | | | |
|---|---|---|---|---|
| Bezugzeichen | Radius [mm] | Dicken bzw. Luftabstände [mm] | Brechzahl $n_e$ | Abbé-Zahl $V_e$ |
| 200 | 1,910 | | | |
| 202 | | 0,730 | 1,886 | 39,72 |
| 204 | UNENDLICH | | | |
| 206 | | 0,300 | 1,723 | 28,73 |
| 208* | 1,457 | | | |
| | | 0,420 | 1,000 | |
| 212 | UNENDLICH | | | |
| | | 1,000 | 1,000 | |
| 214 | UNENDLICH | | | |
| 216 | | 0,590 | 1,519 | 61,79 |
| 218* | -4,183 | | | |
| | | 2,750 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 2A

| Bezugsziffer | Asphärendaten | |
|---|---|---|
| 208 | C | 0,686342 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | 0,239063 |
| | K | 3,237013 |
| | $A_4$ | $-0,200000 \times 10^{-02}$ |
| | $A_6$ | $0,650000 \times 10^{-03}$ |
| | $A_8$ | 0 |
| | $A_{10}$ | 0 |
| | $A_{12}$ | 0 |

Tab. 3

| Brennweite = 7,003 mm | | | | |
|---|---|---|---|---|
| Bezugszeichen | Radius [mm] | Dicken bzw. Luftabstände [mm] | Brechzahl $n_e$ | Abbé-Zahl $v_e$ |
| 200 | 2,229 | | | |
| 202 | | 0,852 | 1,886 | 39,72 |
| 204 | UNENDLICH | | | |
| 206 | | 0,350 | 1,723 | 28,73 |
| 208* | 1,700 | | | |
| | | 0,490 | 1,000 | |
| 212 | UNENDLICH | | | |
| | | 1,167 | 1,000 | |
| 214 | UNENDLICH | | | |
| 216 | | 0,688 | 1,519 | 61,79 |
| 218* | -4,881 | | | |
| | | 3,209 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 3A

| Bezugsziffer | Asphärendaten | |
|---|---|---|
| 208 | C | 0,588235 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | -0,204876 |
| | K | 3,237013 |
| | $A_4$ | $-0,125896 \cdot 10^{-02}$ |
| | $A_6$ | $0,300527 \cdot 10^{-03}$ |
| | $A_8$ | 0 |
| | $A_{10}$ | 0 |
| | $A_{12}$ | 0 |

Tab. 4

| Brennweite = 8,022 mm | | | | |
|---|---|---|---|---|
| Bezugszeichen | Radius [mm] | Dicken bzw. Luftabstände [mm] | Brechzahl $n_e$ | Abbé-Zahl $v_e$ |
| 200 | 2,521 | | | |
| 202 | | 0,830 | 1,886 | 39,72 |
| 204 | UNENDLICH | | | |
| 206 | | 0,530 | 1,734 | 27, 68 |
| 208* | 1,940 | | | |
| | | 0,660 | 1,000 | |
| 212 | UNENDLICH | | | |
| | | 1,220 | 1,000 | |
| 214 | UNENDLICH | | | |
| 216 | | 0,790 | 1,519 | 61,79 |
| 218* | -5,570 | | | |
| | | 3,660 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 4A

| Bezugsziffer | Asphärendaten | |
|---|---|---|
| 208 | C | 0,515464 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | -0,179533 |
| | K | 3,237013 |
| | $A_4$ | 0 |
| | $A_6$ | 0 |
| | $A_8$ | 0 |
| | $A_{10}$ | 0 |
| | $A_{12}$ | 0 |

Tab. 5

| Brennweite = 9,986 mm | | | | |
|---|---|---|---|---|
| Bezugszeichen | Radius [mm] | Dicken bzw. Luftabstände [mm] | Brechzahl $n_e$ | Abbé-Zahl $V_e$ |
| 200 | 3,150 | | | |
| 202 | | 1,000 | 1,886 | 39,72 |
| 204 | UNENDLICH | | | |
| 206 | | 0,710 | 1,734 | 27,68 |
| 208* | 2,424 | | | |
| | | 0,706 | 1,000 | |
| 212 | UNENDLICH | | | |
| | | 1,642 | 1,000 | |
| 214 | UNENDLICH | | | |
| 216 | | 0,983 | 1,519 | 61,79 |
| 218* | -6,959 | | | |
| | | 4,575 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 5A

| Bezugsziffer | Asphärendaten | |
|---|---|---|
| 208 | C | 0,412541 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | -0,143699 |
| | K | 3,237013 |
| | $A_4$ | 0 |
| | $A_6$ | 0 |
| | $A_8$ | 0 |
| | $A_{10}$ | 0 |
| | $A_{12}$ | 0 |

Tab. 6

| Brennweite = 11,901 mm | | | | |
|---|---|---|---|---|
| Bezugszeichen | Radius [mm] | Dicken bzw. Luftabstände [mm] | Brechzahl $n_e$ | Abbé-Zahl $v_e$ |
| 200 | 3,780 | | | |
| 202 | | 1,090 | 1,886 | 39,72 |
| 204 | UNENDLICH | | | |
| 206 | | 0,950 | 1,734 | 27,68 |
| 208* | 2,909 | | | |
| | | 0,840 | 1,000 | |
| 212 | UNENDLICH | | | |
| | | 1,770 | 1,000 | |
| 214 | UNENDLICH | | | |
| 216 | | 1,180 | 1,519 | 61,79 |
| 218* | -8,350 | | | |
| | | 4,500 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 6A

| Bezugsziffer | Asphärendaten | |
|---|---|---|
| 208 | C | 0,343761 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | -0,119760 |
| | K | 3,237013 |
| | $A_4$ | 0 |
| | $A_6$ | 0 |
| | $A_8$ | 0 |
| | $A_{10}$ | 0 |
| | $A_{12}$ | 0 |

Tab. 7

| Brennweite = 14,934 mm | | | | |
|---|---|---|---|---|
| Bezugszeichen | Radius [mm] | Dicken bzw. Luftabstände [mm] | Brechzahl $n_e$ | Abbé-Zahl $v_e$ |
| 200 | 4,725 | | | |
| 202 | | 1,360 | 1,886 | 39,72 |
| 204 | UNENDLICH | | | |
| 206 | | 1,180 | 1,734 | 27,68 |
| 208* | 3,636 | | | |
| | | 1,060 | 1,000 | |
| 212 | UNENDLICH | | | |
| | | 2,060 | 1,000 | |
| 214 | UNENDLICH | | | |
| 216 | | 1,800 | 1,519 | 61,79 |
| 218* | -10,438 | | | |
| | | 7,000 | 1,000 | |
| 220 | UNENDLICH | | | |
| 222 | | 0,500 | 1,519 | 61,79 |
| 224 | UNENDLICH | | | |
| * = asphärische Oberfläche | | | | |

Tab. 7A

| Bezugsziffer | Asphärendaten | |
|---|---|---|
| 208 | C | 0,275028 |
| | K | 0,587688 |
| | $A_4$ | 0 |
| | $A_6$ | 0 |
| | $A_8$ | 0 |
| | $A_{10}$ | 0 |
| | $A_{12}$ | 0 |
| 218 | C | -0,095804 |
| | K | 3,237013 |
| | $A_4$ | 0 |
| | $A_6$ | 0 |
| | $A_8$ | 0 |
| | $A_{10}$ | 0 |
| | $A_{12}$ | 0 |

Tab. 8

| TN1 | | | | |
|---|---|---|---|---|
| Bezugszeichen | Radius [mm] | Dicken bzw. Luftabstände [mm] | Brechzahl $n_e$ | Abbé-Zahl $v_e$ |
| 700* | -100,000 | | | |
| 702 | | 1,000 | 1,623 | 58,14 |
| 704 | 30,000 | | | |
| 706 | | 1,000 | 1,624 | 35,30 |
| 708 | 33,300 | | | |
| * = asphärische Oberfläche | | | | |

Tab. 8A

| Bezugsziffer | Asphärendaten | |
|---|---|---|
| 700 | C | -0,01 |
| | K | 0 |
| | $A_4$ | $0,150000*10^{-03}$ |
| | $A_6$ | 0 |
| | $A_8$ | 0 |
| | $A_{10}$ | 0 |
| | $A_{12}$ | 0 |

Tab. 9

| TN2 | | | | |
|---|---|---|---|---|
| Bezugszeichen | Radius [mm] | Dicken bzw. Luftabstände [mm] | Brechzahl $n_e$ | Abbé-Zahl $v_e$ |
| 700* | -30,000 | | | |
| 702 | | 1,000 | 1,623 | 58,14 |
| 704 | 10,000 | | | |
| 706 | | 1,000 | 1,624 | 35,30 |
| 708 | 28,000 | | | |
| * = asphärische Oberfläche | | | | |

Tab. 9A

| Bezugsziffer | Asphärendaten | |
|---|---|---|
| 700 | C | -0,033333 |
| | K | 0 |
| | $A_4$ | $-0,200000*10^{-03}$ |
| | $A_6$ | 0 |
| | $A_8$ | 0 |
| | $A_{10}$ | 0 |
| | $A_{12}$ | 0 |

Tab. 10

| TN3 | | | | |
|---|---|---|---|---|
| Bezugszeichen | Radius [mm] | Dicken bzw. Luftabstände [mm] | Brechzahl $n_e$ | Abbé-Zahl $v_e$ |
| 700* | -20,000 | | | |
| 702 | | 1,000 | 1,623 | 58,14 |
| 704 | 10,000 | | | |
| 706 | | 1,000 | 1,624 | 35,30 |
| 708 | 29,000 | | | |
| * = asphärische Oberfläche | | | | |

Tab. 10A

| Bezugsziffer | Asphärendaten | |
|---|---|---|
| 700 | C | -0,05 |
| | K | 0 |
| | $A_4$ | $-0,300000*10^{-3}$ |
| | $A_6$ | 0 |
| | $A_8$ | 0 |
| | $A_{10}$ | 0 |
| | $A_{12}$ | 0 |

Tab. 11

| TN4 | | | | |
|---|---|---|---|---|
| Bezugszeichen | Radius [mm] | Dicken bzw. Luftabstände [mm] | Brechzahl $n_e$ | Abbé-Zahl $v_e$ |
| 700* | -14,000 | | | |
| 702 | | 1,000 | 1,623 | 58,14 |
| 704 | 6,000 | | | |
| 706 | | 1,000 | 1,624 | 35,30 |
| 708 | 25,000 | | | |
| * = asphärische Oberfläche | | | | |

Tab. 11A

| Bezugsziffer | Asphärendaten | |
|---|---|---|
| 700 | C | -0,071429 |
| | K | 0 |
| | $A_4$ | $-0,300000*10^{-3}$ |
| | $A_6$ | $-0,400000*10^{-4}$ |
| | $A_8$ | 0 |
| | $A_{10}$ | 0 |
| | $A_{12}$ | 0 |

**Patentansprüche**

1. Kamera-Modul zum Abbilden eines Objektes auf einen Bildsensor (108), wobei Licht einen Strahlengang zwischen Objekt und Bildsensor (108) durchläuft, wobei das Kamera-Modul folgendes aufweist:

   a) mindestens zwei Trägerplatten (104, 112),
   a1) wobei die erste Trägerplatte (104) eine Mehrzahl von Grundobjektiven (106), bestehend aus mehreren Linsen, mit einer optischen Achse (118) trägt;
   a2) wobei die zweite Trägerplatte (112) eine Mehrzahl von Objektiv-Nachsätzen (114), bestehend aus mehreren Linsen, trägt;
   b) wobei jede Trägerplatte (104, 112) eine Vorzugsebene aufweist, die rechtwinklig zur optischen Achse (118) ausgerichtet ist;
   b1) wobei die Grundobjektive (106) auf der ersten Trägerplatte (104) bezogen auf deren Vorzugsebene auf unterschiedlicher Höhe fixiert sind;
   b2) wobei die Objektiv-Nachsätze (114) auf der zweiten Trägerplatte (112) bezogen auf deren Vorzugsebene auf gleicher Höhe angeordnet sind;
   c) wobei die Trägerplatten (104, 112) derart in ihrer Vorzugsebene in ihrer Lage veränderbar sind, dass unterschiedliche Grundobjektive (106) und Objektiv-Nachsätze (114) im Strahlengang positioniert werden können;
   d) wobei die Trägerplatten (104, 112) im Strahlengang übereinander angeordnet sind;
   e) wobei die Grundobjektive (106) und die Objektiv-Nachsätze (114) derart ausgebildet sind, dass sich durch ein Positionieren unterschiedlicher Linsenkombinationen aus
   e1) einem Grundobjektiv (106) allein, oder
   e2) einem Grundobjektiv (106) mit einem Objektiv-Nachsatz (114),
   im Strahlengang sich eine Mehrzahl abbildender optischer Systeme mit unterschiedlichen Brennweiten erzeugen lässt, wobei die optischen Systeme geeignet sind, das Objekt auf den Bildsensor (108) abzubilden;
   e3) wobei eine Fokussierung mittels einer Lageveränderung des Bildsensors (108) entlang der optischen Achse (118) erfolgt; und

f) wobei die Grundobjektive (106) und die Objektiv-Nachsätze (114) derart ausgebildet sind, dass unterschiedliche Linsenkombinationen aus einem Grundobjektiv und einem Objektiv-Nachsatz zu unterschiedlichen Brennweiten führen, wobei die Anzahl der Linsenkombinationen mit unterschiedlichen Brennweiten die Anzahl der Grundobjektive (106) oder Objektiv-Nachsätze (114) auf einer der Trägerplatten (104, 112) übersteigt.

2. Kamera-Modul nach dem vorhergehenden Anspruch,
**dadurch gekennzeichnet,**
**dass** die Grundobjektive (106), von der Objektseite beginnend, aus folgenden Linsen bestehen:

   a) einer ersten plan-konvexen Linse (202),
   wobei die plane Oberfläche (204) der Linse (202) von der Objektseite abgewandt ist;
   b) einer zweiten plan-konkaven Linse(206),
   wobei die plane Oberfläche (204) der Linse (206) von der Bildseite abgewandt ist;
   c) einer Blende (212),
   d) einer dritten plan-konvexen Linse (216), wobei die plane Oberfläche (214) der Linse (216) von der Bildseite abgewandt ist.

3. Kamera-Modul nach dem vorhergehenden Anspruch,
**dadurch gekennzeichnet,**
**dass** die erste plan-konvexe Linse (202) aus einem Material mit einem Brechungsindex größer als 1,65 besteht.

4. Kamera-Modul nach einem der vorhergehenden Ansprüche,
**dadurch gekennzeichnet,**
**dass** die Objektiv-Nachsätze (114), von der Objektseite beginnend aus folgenden Linsen besteht:

   a) einer ersten bi-konkaven Linse (702), und
   b) einer zweiten Meniskuslinse (706),

   wobei die konkave Oberfläche (708) der Meniskuslinse (706) von der Objektseite abgewandt ist.

5. Kamera-Modul nach dem vorhergehenden Anspruch,
**dadurch gekennzeichnet,**
**dass** die Abbe-Zahlen der ersten bi-konkaven Linse (702) und der zweiten Meniskuslinse (706) sich um mindestens einen Faktor 1,5 unterscheiden.

6. Kamera-Modul nach einem der vorhergehenden Ansprüche,
**dadurch gekennzeichnet,**
**dass** der Abstand zwischen der ersten objektseitigen Linsenoberfläche (200) jedes Grundobjektivs (106) und dem Bildsensor (108) maximal 19 mm beträgt.

7. Kamera-Modul nach einem der vorhergehenden Ansprüche,
**dadurch gekennzeichnet,**
**dass** der Durchmesser der Linsen der Grundobjektive (106) und der Objektiv-Nachsätze (114) maximal 6 mm beträgt.

## Claims

1. A camera module for imaging an object onto an image sensor (108), light traversing a beam path between the object and image sensor (108), the camera module having the following:

   a) at least two carrier plates (104, 112),
   a1) the first carrier plate (104) bearing a plurality of basic objectives (106), comprising a plurality of lenses, with an optical axis (118);
   a2) the second carrier plate (112) bearing a plurality of downstream objective attachments (114) comprising a plurality of lenses;
   b) each carrier plate (104, 112) having a preferred plane that is aligned perpendicular to the optical axis (118);
   b1) the basic objectives (106) on the first carrier plate (104) being fixed at different heights with reference to their preferred plane;

b2) the objective downstream attachments (114) on the second carrier plate (112) being arranged at the same height with reference to their preferred plane;

c) the position of the carrier plates (104, 112) being variable in their preferred plane in such a way that different basic objectives (106) and objective downstream objective attachments (114) can be positioned in the beam path;

d) the carrier plates (104, 112) being arranged one above another in the beam path;

e) the basic objectives (106) and the downstream objective attachments (114) being designed in such a way that, by positioning different lens combinations of

e1) a basic objective (106) alone, or

e2) a basic objective (106) with an objective downstream attachment (114),

it is possible to produce in the beam path a plurality of imaging optical systems of different focal lengths, the optical systems being suitable for imaging the object onto the image sensor (108);

e3) focusing being performed by means of changing the position of the image sensor (108) along the optical axis (118); and

f) the basic objectives (106) and the downstream objective attachments (114) being designed in such a way that different lens combinations of a basic objective and an objective downstream attachment result in different focal lengths, the number of the lens combinations of different focal lengths exceeding the number of the basic objectives (106) or downstream objective attachments (114) on one of the carrier plates (104, 112).

2. The camera module as claimed in the preceding claim,
**characterized**
**in that**, starting from the object side, the basic objectives (106) are composed of the following lenses:

a) a first plano-convex lens (202),
the plane surface (204) of the lens (202) being averted from the object side;
b) a second plano-concave lens (206),
the plane surface (204) of the lens (206) being averted from the image side;
c) a diaphragm (212), and
d) a third plano-convex lens (216), the plane surface (214) of the lens (216) being averted from the image side.

3. The camera module as claimed in the preceding claim,
**characterized**
**in that** the first plano-convex lens (202) consists of a material with a refractive index greater than 1.65.

4. The camera module as claimed in one of the preceding claims,
**characterized**
**in that**, starting from the object side, the downstream objective attachment (114) comprises the following lenses:

a) a first bi-concave lens (702), and
b) a second meniscus lens (706),

the concave surface (708) of the meniscus lens (706) being averted from the object side.

5. The camera module as claimed in the preceding claim,
**characterized**
**in that** the Abbe numbers of the first bi-concave lens (702) and of the second meniscus lens (706) differ by at least a factor of 1.5.

6. The camera module as claimed in one of the preceding claims,
**characterized**
**in that** the distance between the first object-side lens surface (200) of each basic objective (106) and the image sensor (108) is at most 19 mm.

7. The camera module as claimed in one of the preceding claims,
**characterized**
**in that** the diameter of the lenses of the basic objective (106) and of the downstream objective attachments (114) is at most 6 mm.

**Revendications**

1.  Module caméra pour la reproduction d'un objet sur un capteur d'image (108), la lumière parcourant un trajet de rayons entre l'objet et le capteur d'image (108),
    le module caméra comportant ce qui suit :

    a) au moins deux plaques de support (104, 112),
    a1) la première plaque de support (104) portant plusieurs objectifs principaux (106), constitués de plusieurs lentilles, avec un axe optique (118) ;
    a2) la deuxième plaque de support (112) portant plusieurs objectifs supplémentaires (114), constitués de plusieurs lentilles ;
    b) chaque plaque de support (104, 112) comportant un plan préférentiel qui est orienté perpendiculairement à l'axe optique (118) ;
    b1) les objectifs principaux (106) étant fixés à des hauteurs différentes sur la première plaque de support (104) par rapport au plan préférentiel de celle-ci ;
    b2) les objectifs supplémentaires (114) étant agencés à la même hauteur sur la deuxième plaque de support (112) par rapport au plan préférentiel de celle-ci ;
    c) les plaques de support (104, 112) étant modifiables de telle sorte quant à leur position dans leur plan préférentiel que des objectifs principaux différents (106) et des objectifs supplémentaires différents (114) peuvent être positionnés dans le trajet des rayons ;
    d) les plaques de support (104, 112) étant agencées l'une au-dessus de l'autre dans le trajet des rayons ;
    e) les objectifs principaux (106) et les objectifs supplémentaires (114) étant conçus de telle sorte que, par un positionnement de différentes combinaisons de lentilles, on peut produire
    e1) à partir d'un objectif principal (106) seul ou e2) à partir d'un objectif principal (106) avec un objectif supplémentaire (114)
    dans le trajet des rayons plusieurs systèmes optiques reproducteurs avec différentes distances focales, les systèmes optiques convenant à la reproduction de l'objet sur le capteur d'image (108) ;
    e3) une focalisation s'effectuant au moyen d'une modification de position du capteur d'image (108) le long de l'axe optique (118) ; et
    f) les objectifs principaux (106) et les objectifs supplémentaires (114) étant conçus de telle sorte que différentes combinaisons de lentilles à partir d'un objectif principal et d'un objectif supplémentaire conduisent à différentes distances focales, le nombre des combinaisons de lentilles avec différentes distances focales dépassant le nombre des objectifs principaux (106) ou des objectifs supplémentaires (114) sur l'une des plaques de support (104, 112).

2.  Module caméra selon la revendication précédente, **caractérisé en ce que** les objectifs principaux (106) sont constitués, en commençant par le côté de l'objet, des lentilles suivantes :

    a) une première lentille plan-convexe (202), la surface plane (204) de la lentille (202) étant à l'opposé du côté de l'objet ;
    b) une deuxième lentille plan-concave (206), la surface plane (204) de la lentille (206) étant à l'opposé du côté de l'image ;
    c) un écran (212) ;
    d) une troisième lentille plan-convexe (216), la surface plane (214) de la lentille (216) étant à l'opposé du côté de l'image.

3.  Module caméra selon la revendication précédente, **caractérisé en ce que** la première lentille plan-convexe (202) est en un matériau ayant un indice de réfraction supérieur à 1,65.

4.  Module caméra selon l'une des revendications précédentes, **caractérisé en ce que** les objectifs supplémentaires (114) sont constitués, en commençant par le côté de l'objet, des lentilles suivantes :

    a) une première lentille biconcave (702), et
    b) une deuxième lentille ménisque (706),
    la surface concave (708) de la lentille ménisque (706) étant à l'opposé du côté de l'objet.

5.  Module caméra selon la revendication précédente, **caractérisé en ce que** le nombre d'Abbé de la première lentille biconcave (702) et celui de la deuxième lentille ménisque (706) se distinguent d'au moins un facteur 1,5.

6. Module caméra selon l'une des revendications précédentes, **caractérisé en ce que** la distance entre la première surface de lentille (200), du côté de l'objet, de chaque objectif principal (106) et le capteur d'image (108) vaut 19 mm au maximum.

7. Module caméra selon l'une des revendications précédentes, **caractérisé en ce que** le diamètre des lentilles des objectifs principaux (106) et des objectifs supplémentaires (114) vaut 6 mm au maximum.

Fig. 1

EP 2 519 852 B1

**Fig. 2**

**Fig. 3**

**Fig. 4**

**Fig. 5**

Fig. 6

**Fig. 7**

**Fig. 8**

**Fig. 9**

**Fig. 10**

**Fig. 11**

**Fig. 12**

**Fig. 13**

Fig. 14

**Fig. 15**

EP 2 519 852 B1

Fig. 16

37

**Fig. 17**

**Fig. 18**

**Fig. 19**

**Fig. 20**

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080049334 A1
- US 20080007623 A
- US 7495852 B2
- US 2008088732 A1
- US 20070886087 A1
- JP 62244011 B